## Europäisches Patentamt
## European Patent Office
## Office européen des brevets

(19)

(11) Numéro de publication: **0 013 779**
**B1**

(12)

# FASCICULE DE BREVET EUROPEEN

(45) Date de publication du fascicule du brevet:
04.08.82

(51) Int. Cl.³: **B 60 K 28/00,** H 01 H 35/14 //
B60R25/04, B60R21/10,
B60Q1/52, B60R16/00

(21) Numéro de dépôt: 79200797.3

(22) Date de dépôt: **21.12.79**

(54) **Coupe-circuit de sécurité pour véhicule.**

(30) Priorité: **10.01.79 CH 225/79**

(43) Date de publication de la demande:
**06.08.80 Bulletin 80/16**

(45) Mention de la délivrance du brevet:
**04.08.82 Bulletin 82/31**

(84) Etats contractants désignés:
**CH DE FR GB IT SE**

(56) Documents cités:
**AU-D-6 325 865
CH-A-538 187
DE-A-2 434 532
FR-A-2 038 639
US-A-2 331 017
US-A-2 415 086
US-A-3 110 780
US-A-3 251 033
US-A-3 745 277**

(73) Titulaire: **R.T.R. S.A., CH-2720 Tramelan (Berne) (CH)**

(72) Inventeur: **Rossel, Roland, Haute 2, CH-2720 Tramelan (Berne) (CH)**
Inventeur: **Mathez, Marc, Prés 19, CH-2720 Tramelan (Berne) (CH)**

(74) Mandataire: **Bovard, Fritz Albert et al, Bovard & Cie Ingénieurs- Conseils ACP et Avocats Optingenstrasse 16, CH-3000 Berne 25 (CH)**

BUNDESDRUCKEREI BERLIN

Coupe-circuit de sécurité pour véhicule

La présente invention a pour objet un coupecircuit de sécurité pour véhicule, comportant un balancier monté sur une rotule, un organe de retenue mobile entre une position d'enclenchement et une position de déclenchement, un ressort agissant sur l'organe de retenue de manière à la maintenir en appui contre le balancier et verrouiller ce dernier lorsque le coupe-circuit est en position d'enclenchement et à le déplacer vers la position de déclenchement quand le balancier est écarté de sa position verrouillée par suite d'un choc, et un interrupteur comportant au moins un élément de contact fixe et un élément de contact mobile, ce dernier monté sur un porte-contact qui se déplace avec l'organe de retenue.

L'utilisation de coupe-circuit de sécurité dans les voitures automobiles et, en particulier dans les voitures de compétition, se répand de plus en plus dans la pratique et l'uitilité de ces éléments n'est plus à démontrer. Toutefois, les expériences pratiques faites sur les appareils connus jusqu'à maintenant ont fait apparaître certains défauts et certaines insuffisances de ces appareils.

Le brevet CH-A-538 187 décrit un coupe-circuit dont l'organe de retenue est une pièce coudée en forme d'équerre pivotant sur un axe fixe par rapport au bâti de l'appareil. Selon les expériences faites, l'encombrement de cet appareil était exagéré, de sorte que son emploi ne rencontrait pas tout le succès possible.

Les brevets US-A-3 745 277 et US-A-2 331 017, ainsi que le brevet FR-A-2 038 639 décrivent également des constructions de coupe-circuit de sécurité comportant un balancier à rotule. L'encombrement de ces appareils est plus réduit que celui du brevet suisse précédemment mentionné. Il est apparu toutefois qu'il était désirable d'adjoindre à des coupe-circuits du genre mentionné plus haut certaines fonctions supplémentaires permettant d'élargir considérablement leur utilité. Ainsi, l'un des éléments qu'il paraissait désirable de prévoir était un moyen simple et pratique permettant de rappeler le coupe-circuit dans sa position d'enclenchement après un déclenchement. Dans la plupart des appareils connus, le réarmage du coupe-circuit s'effectue par une manoeuvre manuelle en pressant sur un bouton ou en tirant sur une manette. L'étude des perfectionnements possibles sur la base des exécutions connues a montré toutefois que l'adjonction d'un organe de réenclenchement de type électro-magnétique se heurtait à des difficultés, étant donné que la course de l'organe de retenue était relativement faible, de sorte qu'un réenclenchement par bobine électro-magnétique exigeait une force de rappel considérable et, par conséquent, un électro-aimant de dimensions telles que l'encombrement du coupe-circuit dépassait les valeurs désirables.

Cependant, les études ont aussi montré qu'il était désirable de pouvoir équiper le coupe-circuit d'un ou même de plusieurs interrupteurs auxiliaires se fermant au moment du déclenchement.

Ainsi, le but de la présente invention est de perfectionner les coupe-circuits de sécurité du genre mentionné au début de façon à leur adjoindre des fonctions supplémentaires multipliant leurs possibilités d'emploi et par conséquent leur utilité dans les véhicules automobiles et cela tout en conservant un encombrement aussi réduit que possible.

Dans ce but, le coupe-circuit selon l'invention est caractérisé en ce que le porte-contact est relié à l'organe de retenue par un système d'éléments articulés qui lui impose un déplacement d'amplitude plus faible que celui de l'organe de retenue lors du déclenchement, et en ce que l'organe de retenue est relié à un élément d'armature capable de coopérer avec une bobine d'électro-aimant connectée dans un circuit de réenclenchement.

On va décrire ci-après, à titre d'exemple, une forme d'exécution du coupe-circuit selon l'invention en se référant au dessin annexé dont:

la fig. 1 est une vue en coupe longitudinale simplifiée du coupe-circuit avec son couvercle enlevé,

la fig. 2, une vue en élévation latérale partielle d'un élément du coupe-circuit de la fig. 1,

les fig. 3 et 4, sont des vues en élévation latérale partielle représentant le balancier, l'organe de retenue et le corps de contact en position respectivement déverrouillée et verrouillée, et

la fig. 5, un schéma électrique du coupe-circuit et de ses connexions à la batterie et au circuit électrique d'une voiture automobile.

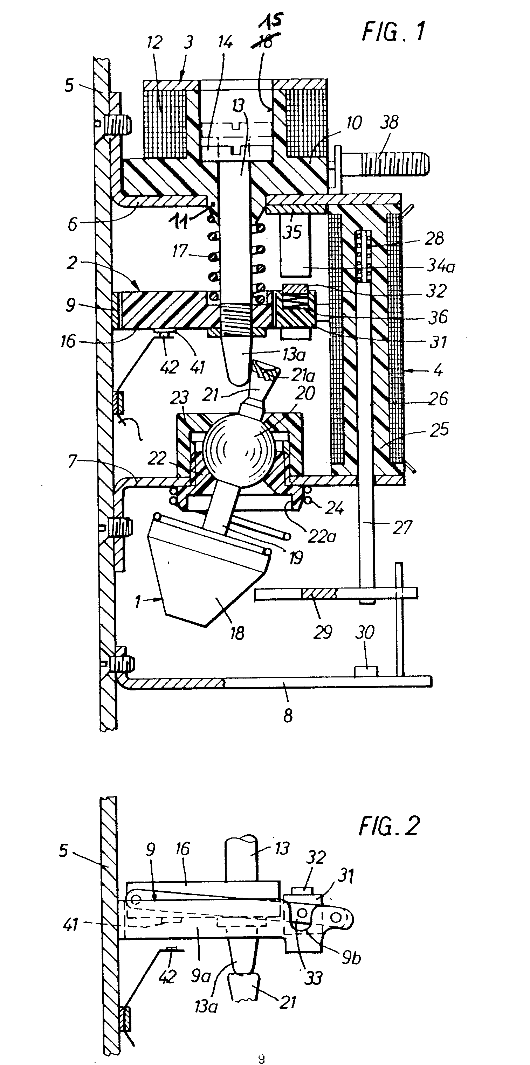

A la fig. 1, on voit les éléments principaux du coupe-circuit en position déverrouillée. Le balancier 1, l'organe de retenue 2, l'électro-aimant de réenclenchement 3 et l'électro-aimant de déclenchement 4 sont montés sur un bâti commun qui comporte une plaque de base 5, différentes plaques de support 6, 7 et un couvercle 8. L'étrier 9 sera décrit plus en détail plus loin. Les plaques de support 6 et 7 sont en forme d'équerre et sont vissées sur la plaque de base 5. L'axe général du dispositif est parallèle au plan de la plaque 5 et l'ensemble est destiné à être fixé verticalement dans une voiture automobile de telle façon qu'en cas de choc latéral, le balancier 1 quitte, du fait de son inertie, sa position verrouillée (fig. 2) pour parvenir en position déverrouillée telle qu'on la voit à la fig. 1.

La plaque de support 6 porte un corps de bobine 10 en matière plastique de forme générale cylindrique et dont le noyau central conique 11 est engagé dans un trou de la plaque 6. Le corps de bobine 10 porte l'enroulement 12 de l'électro-aimant de réenclenchement 3 et guide par son passage central cylindrique la tige 13 de l'organe de retenue. Cette tige se termine par une tête 14 jouant le rôle de l'armature mobile de l'électro-aimant. Dans la position de la fig. 1, la tête 14 se trouve au fond du logement d'entrée 15 que présente le corps de bobine 10. La tige 13 présente à son autre extrémité une pointe conique 13a à sommet arrondi et sa partie cylindrique traverse une plaque porte-contact en matière plastique 16 de forme carrée à laquelle elle est vissée de façon que cette plaque soit solidaire de la tige 13 et constitue avec elle l'organe de retenue 2 du coupecircuit. Pour améliorer le fonctionnement de cette armature, on pourrait aussi lui donner une forme légèrement conique, le diamètre minimum se trouvant au niveau de la tête 14. Cette dernière serait également tronconique dans l'autre sens. Comme on le voit à la fig. 1, un ressort 17 de forme légèrement conique est engagé sur le noyau 11 du corps de bobine 10 et pénètre dans un logement de la plaque 16 de façon à pousser l'équipage mobile de l'électro-aimant vers le bas à la fig. 1. Lorsque la bobine 12 de l'électro-aimant de réenclenchement est excitée par fermeture d'un contact, comme on verra plus loin, l'armature mobile 14 est sollicitée vers le haut et se déplace en translation guidée par la corps 10 contre l'action du ressort 17.

C'est la pointe conique 13a qui sert d'élément de verrouillage pour le balancier 1. Ce dernier se com pose d'une masselotte 18 de forme générale conique, d'une tige 19, d'une bille constituant une rotule 20 et d'une tête de verrouillage 21. Ces éléments sont alignés selon un axe et la bille 20 est prise dans deux logements sphériques ménagés l'un dans un siège 22 et l'autre dans un capuchon vissé 23. Ces deux éléments en matière plastique sont montés sur la plaque latérale de support 7 qui s'étend parallèlement à la plaque 6 un peu plus bas que cette dernière. Par vissage du couvercle 23, on peut serrer plus ou moins la rotule entre les deux éléments 23 et 22 de façon à réaliser un ajustage qui permet la rotation du balancier autour de son centre dans toutes les directions tout en assurant le maintien de cette pièce sans jeu. Le siège 22 présente, à sa partie inférieure, une nervure circulaire 22a qui sert de guidage à un ressort 24 qui relie le siège 22 à la masselotte 18 et qui s'appuie à son extrémité inférieure sur un épaulement de cette masselotte. Le ressort 24 tend à ramener constamment le balancier dans une position coaxiale à l'armature mobile 14. Sa force est suffisante pour soulever la masselotte 18 même si la position générale du coupe-circuit est oblique. Ce ressort permet donc d'assurer le réenclenchement du coupe-circuit quelle que soit la position de la voiture. La tête 21 du balancier 1 présente une forme légèrement tronconique et sa face supérieure est munie d'une creusure 21a qui correspond à la pointe de l'extrémité conique 13a et qui permet le verrouillage comme on le verra plus loin.

L'électro-aimant 4 qui est encore visible à la fig. 1 permet d'effectuer un déclenchement du coupe-circuit à distance et à volonté en cas de nécessité. Le corps de bobine 25 est également en matière plastique et est fixé par ses deux extrémités sur des bossages latéraux que présentent les plaques de support 6 et 7. L'enroulement 26 est porté par le corps de bobine 25 qui présente d'autre part un logement central cylindrique borgne. Dans ce logement est engagée la tige mobile 27 qui joue le rôle d'armature et qui est sollicitée dans le sens de l'extraction par un ressort à boudin 28. Ce dernier est comprimé entre le fond du logement du corps de bobine 25 et un épaulement de la tige 27. A l'extrémité inférieure de la tige 27 est fixée une pièce latérale en forme de plaque 29 en matière plastique qui joue le rôle de peigne. Aussi longtemps que la bobine 26 de l'électro-aimant 4 n'est pas sous tension, le ressort 28 agit sur la tige 27 et la pousse vers le bas, de sorte que le peigne 29, guidé par le couvercle de l'appareil, se trouve en appui sur une butée 30 portée par la paroi frontale du couvercle 8.

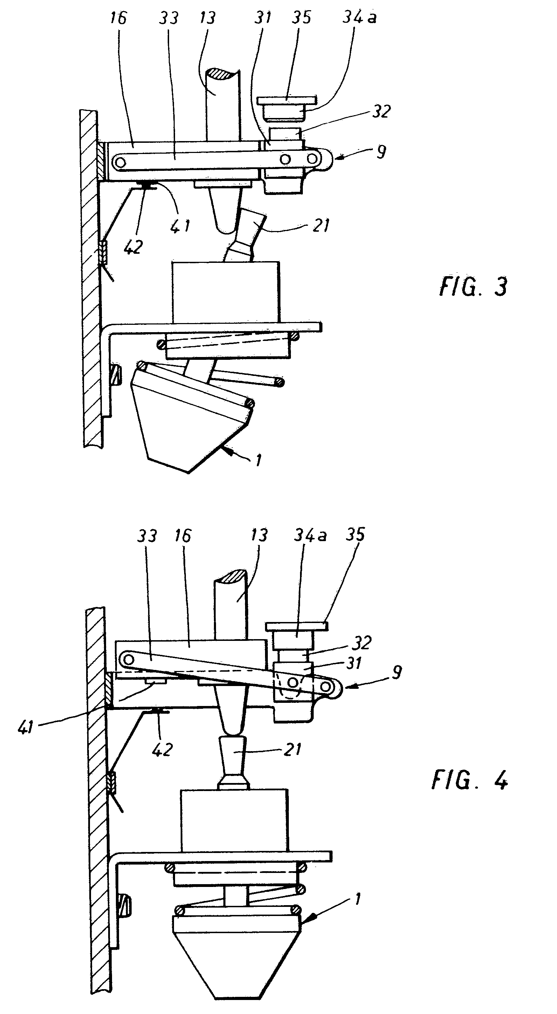

Dans cette position du peigne 29, le balancier peut venir en position verrouillée, comme on le verra à la fig. 4, tandis que si la bobine 26 est excitée, la tige 27 est attirée à l'intérieur du corps de bobine 25 et le peigne 29 accroche la masselotte 18 au cours de son déplacement. Cette masselotte étant de forme conique, subit un effort latéral de la part du peigne 29 et cet effort suffit à provoquer le déverrouillage du balancier de sorte que la tige 13 et l'organe de retenue 2 se déplacent vers le bas sous l'action du ressort 17. En même temps, la pointe conique 13a s'engage sur le côté de la tête 21 du balancier, ce qui empêche ce dernier de reprendre sa position de verrouillage.

Les éléments qui réalisent l'ouverture et la fermeture de l'interrupteur principal du coupe-circuit vont maintenant être décrits en se référant aux fig. 2, 3 et 4. La plaque de matière plastique 16, de forme rectangulaire, qui est fixée sur la tige 13 est visible à la fig. 2. On voit que la tige 13 n'est pas fixée au centre de cette plaque, mais légèrement sur le côté et que, parallèlement à cette plaque et sur son côté s'étend une pièce en forme de parallélépipède allongé désignée par 31. Cette pièce constitue le porte-contact et porte un élément de contact 32 en forme de pont qui constitue l'élément essentiel du coupe-circuit. Le montage de l'élément de contact 32 sur le porte-contact 31 sera décrit plus loin. Le porte-contact 31 est relié de son côté à la plaque 16 par deux barres métalliques 33 faisant office de leviers. Ces barres rigides sont disposées latéralement par rapport aux plaques 16 et 31. Elles sont articulées, d'une part sur la plaque 16 au voisinage de son bord situé du côté de la plaque de base 5 et, d'autre part, sur les extrémités de l'organe 31. L'extrémité de chacune des barres 33 qui s'étend au-delà de l'organe 31 est elle-même articulée sur l'un des montants 9a de l'étrier 9. L'embase de ce dernier est fixée sur la plaque de base 5 et ses montants 9a encadrent les parties mobiles décrites précédemment. Chacun des montants 9a présente une échancrure 9b au voisinage de son extrémité droite afin de permettre le déplacement de la tête de l'articulation entre le levier 33 et l'organe 31. Aux fig. 2 et 4, les extrémités des montants 9a de l'étrier 9 sont représentés en traits pointillés. On voit de nouveau les leviers 33 articulés, d'une part, sur la plaque 16 et d'autre part, sur l'organe 31 et la tige 13 dont l'extrémité est fixée à la plaque 16.

En comparant les fig. 3 et 4, on voit les positions relatives des éléments 16, 31 et 32 lorsque le balancier 1 est en position déverrouillée comme à la fig. 3 ou en position verrouillée comme à la fig. 4. On voit que la course de l'organe de retenue (13, 16) est beaucoup plus longue que celle de l'organe 31. L'élément de contact 32 est appliqué contre deux plots 34a et 34b dans la position de la fig. 4, alors qu'il se trouve à distance de ces plots dans la fig. 3. Entre ces deux positions, l'organe 31 se déplace en étant entraîné par sa liaison pivotante aux barres 33. En outre, il est guidé par le bord de la plaque 16. Dès que l'élément 32 entre en contact avec les éléments fixes 34a et 34b, il appuie sa face antérieure contre eux. Ensuite, la fin de la course de l'organe 16 provoque la compression des ressorts 36, de sorte que l'élément 32 s'appuie fortement contre les éléments 34a et 34b. Aux fig. 3 et 4, seul le plot 34a est visible. Il est fixé avec intercalement d'une lame isolante 35 sur une partie de la plaque de support 6 qui se trouve sur le côté de l'électro-aimant 3.

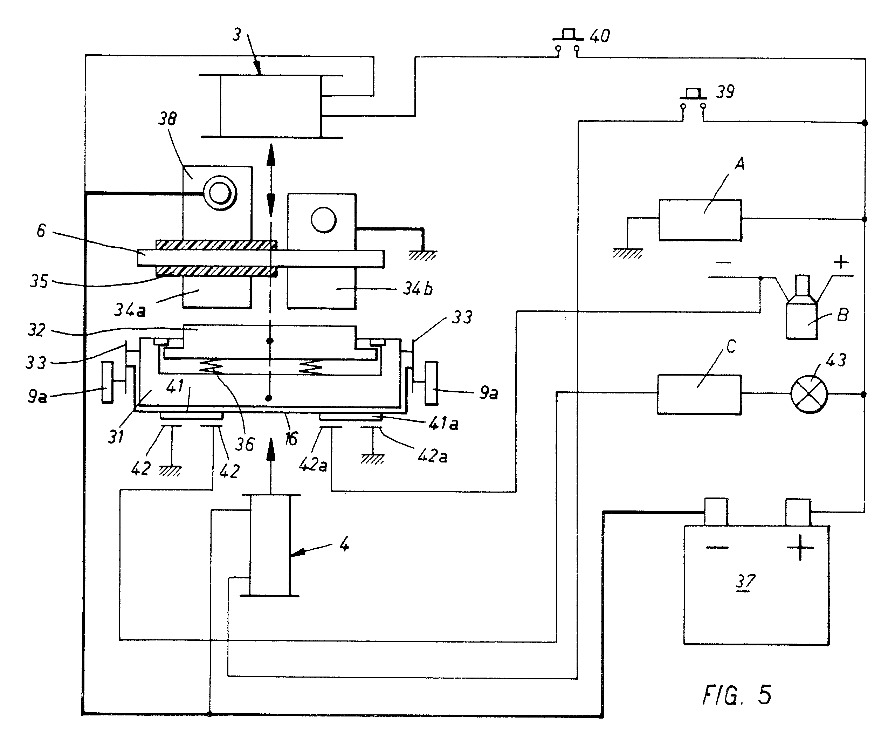

Revenant à la fig. 1, on voit la façon dont l'élément de contact 32 est monté sur le porte-contact 31. Cet organe, en matière plastique, présente un logement rectangulaire dans sa face tournée vers la plaque 6 et vers les plots 34a et 34b. L'élément de contact 32 est engagé dans ce logement et sollicité par un ou plusieurs ressorts 36 qui sont comprimés entre le fond du logement et la face arrière de l'élément 32. Des éléments de retenue, représentés schématiquement à la fig. 5, assurent le maintien de l'élément de contact 32 qui joue le rôle d'un pont et qui, en position d'enclenchement du coupe-circuit, c'est-à-dire en position de verrouillage du balancier 1, connecte électriquement les plots 34a et 34b.

Il résulte des explications qui précèdent que la course de la tige mobile 13, lorsque le balancier passe de la position verrouillée (fig. 4) à la position déverrouillée (fig. 3) par exemple par suite d'un choc, est beaucoup plus grande que la course qu'effectue l'organe de contact 31 et, à plus forte raison, l'élément 32. Inversement, au moment du réenclenchement, l'énergie que doit développer l'électro-aimant 3, pour passer de la position de la fig. 3 à la position de la fig. 4, doit assurer la compression du ou des ressorts 36 et du ressort 17. Or, l'énergie déployée par l'électro-aimant est égale à la force agissant sur l'armature mobile multipliée par le chemin que cette armature décrit. La bobine 12 sera d'autant plus petite que cette énergie est fournie le long d'un chemin allongé. Ainsi les barres 33 qui transforment les chemins du porte-contact 31 et de l'organe de retenue 2 permettent de réduire les dimensions de la bobine 12. L'énergie nécessaire pour presser l'élément 32 contre les plots 34a et 34b est facilement fournie par la bobine 12. Il est essentiel d'assurer un contact parfait entre les plots 34a et 34b et l'élément 32 puisque tout le courant nécessaire au système électrique de la voiture passe en marche normale à travers ces contacts. Il est ainsi possible d'assurer le réenclenchement du coupe-circuit au moyen d'une bobine d'électro-aimant de dimensions réduites. L'agencement des leviers 33 articulés, d'une part, sur la plaque 16 et, d'autre part, sur le porte-contact 31, permet de réduire aussi considérablement les dimensions générales du coupe-circuit, de sorte que l'ensemble, y compris l'électro-aimant de déclenchement à distance 4, peut se loger dans un boîtier ne mesurant pas plus de 15 cm de longueur sur une section de 6×6 cm par exemple.

La fig. 5 montre le schéma électrique général du coupe-circuit. La batterie de la voiture est représentée en 37. Le circuit principal de mise à la masse de la batterie est représenté par des lignes en traits gras. Il va du pôle négatif de la batterie jusqu'à une tige de connexion 38 qui est portée par une languette coudée connectée électriquement au plot 34a. De là, le circuit passe par l'élément de contact 32, lorsque ce dernier est en position d'enclenchement, puis par le plot 34b. Celui-ci est relié à la masse de la voiture par la plaque de support 6 et la plaque de base 5. Le circuit A symbolise l'ensemble des éléments qui nécessitent une alimentation électrique dans la voiture. Il est connecté entre la masse et le pôle positif de la batterie. On voit, d'autre part, les divers circuits auxiliaires, notamment un circuit qui alimente la bobine de l'électro-aimant de déclenchement à distance 4. Ce circuit passe par un interrupteur à bouton-poussoir 39 qui peut être monté, par exemple, sur le tableau de bord de la voiture, et qui permet de procéder au déclenchement du coupe-circuit. Un autre circuit auxiliaire passe par la bobine de l'électro-aimant 3 et par un interrupteur à bouton-poussoir 40 qui peut également être monté sur le tableau de bord de la voiture.

Toutefois, le coupe-circuit décrit peut comporter encore d'autres circuits auxiliaires et pour cela, on reviendra rapidement aux fig. 1, 3 et 4. Comme on le voit à ces figures, la plaque 16 solidaire de l'armature mobile 14, porte deux ponts de contact 41 et 41a sur sa face arrière, c'est-à-dire sur sa face inférieure. Ces ponts s'étendent en regard d'éléments de contact 42 et 42a qui sont fixés à l'extrémité de languettes élastiques montées sur la plaque de base 5. Lorsque le balancier est en position déverrouillée, c'est-à-dire immédiatement après un choc, quand le circuit principal de la voiture a été interrompu, les ponts 41 et 41a sont en contact avec les éléments 42 et 42a, de sorte que les contacts auxiliaires sont fermés. Ils sont reliés à des bornes placées sur le couvercle de l'appareil, ce qui facilite les connexions lors du montage. En revanche, ils sont ouverts en situation normale, c'est-à-dire quand le balancier est verrouillé par l'organe de retenue constitué par l'équipage mobile 2 de l'électro-aimant 3. Les éléments de contact 41, 41a, 42 et 42a sont également visibles à la fig. 5. On voit que la plaque 16 porte deux ponts 41 et 41a situés l'un à côté de l'autre et que, lorsque le coupe-circuit est ouvert, chacun de ces ponts ferme un interrupteur qui alimente un circuit auxiliaire. Le coupe-circuit alimente alors un circuit auxiliaire désigné par C. D'autre part, l'interrupteur 42a, 41a qui est aussi fermé met à la masse le secondaire de la bobine d'allumage B.

On sait que plus les dispositifs de la partie électrique des voitures automobiles se développent, plus l'intérêt qu'il peut y avoir à assurer certaines fonctions de secours ou de sécurité en cas d'accident augmente. Ainsi, le circuit auxiliaire C représenté à la fig. 5, peut, par exemple, assurer le décrochement temporisé des ceintures de sécurité si le coupe-circuit a déclenché à la suite d'un choc. Il pourrait aussi enclencher automatiquement un phare de secours ou les feux de panne de la voiture.

Avantageusement, on prévoit une lampe témoin 43 qui signale le déclenchement de l'appareil.

Ainsi, grâce au fait que l'organe de retenue du dispositif décrit comporte une plaque 16 de grandes dimensions mobile en translation avec la tige 13 guidée elle-même dans l'alésage du corps de bobine, il a été possible d'incorporer au coupe-circuit les ponts 41 qui permettent la commande d'interrupteurs auxiliaires. Mais d'autre part, la réduction de dimension obtenue grâce à l'agencement du système articulé décrit reliant le porte-contact 31 à l'organe de retenue (13, 16) et la présence des électro-aimants 3 et 4 de réenclenchement à distance et de déclenchement automatique, permet aussi de multiplier les fonctions du coupe-circuit de sécurité. Cet appareil devient un instrument qui a, non seulement, une fonction de sécurité mais également une fonction d'aide à l'entretien et au service de la voiture. En effet, dans une forme d'exécution particulière, l'interrupteur à bouton-poussoir 40 pourrait, par exemple, être combiné avec un contact à serrure et placé à un endroit dissimulé de la voiture. Ceci permettrait de combiner le dispositif décrit avec une fonction de garantie anti-vol. Il suffirait, après avoir arrêté le moteur et retiré la clé de contact, de provoquer le déverrouillage du balancier par une pression sur le bouton-poussoir 39. Dans ce cas, la mise en route de la voiture devrait être précédée d'une manoeuvre de l'interrupteur 40 qui ne pourrait être effectuée que par le possesseur de la voiture disposant de la clé nécessaire. En effet, avant de pouvoir mettre en marche le moteur, il sera nécessaire de réenclencher le coupe-circuit par manoeuvre du bouton 40 qui excite un électro-aimant 3 et amène l'armature mobile 2 dans une position telle que le balancier reprend sa place normale et que le contact principal 32, 34 reste fermé.

On a également constaté que la présence de ce dispositif facilite l'accomplissement des services d'entretien. Il est en effet très facile de mettre hors service toute la partie électrique de la voiture sans qu'il soit nécessaire de démonter les cosses de connexion de la batterie, ce qui n'est pas toujours très commode et introduit un risque de détérioration.

La possibilité de déconnecter le circuit électrique de la voiture permet encore de protéger et de conserver la batterie, surtout en période froide, en évitant des fuites de courant. La durée de vie des batteries s'en trouve ainsi prolongée.

## Revendications

1. Coupe-circuit de sécurité pour véhicule, comportant un balancier (1) monté sur une rotule (20), un organe de retenue (2) du balancier, mobile entre une position d'enclenchement et une position de déclenchement, un ressort (17) agissant sur l'organe de retenue de manière à le maintenir en appui contre le balancier et verrouiller ce dernier lorsque le coupe-circuit est en position d'enclenchement et à le déplacer vers la position de déclenchement quand le balancier est écarté de sa position verrouillée par suite d'un choc, et un interrupteur comportant au moins un élément de contact fixe (34) et un élément de contact mobile (32), ce dernier monté sur un porte-contact (31) qui se déplace avec l'organe de retenue (2), caractérisé en ce que le porte-contact (31) est relié à l'organe de retenue par un système d'éléments articules (9, 33) qui lui impose un déplacement d'amplitude plus faible que celui de l'organe de retenue lors du déclenchement, et en ce que l'organe de retenue est relié à un élément d'armature (14) capable de coopérer avec une bobine (12) d'électro-aimant connectée dans un circuit de réenclenchement.

2. Coupe-circuit selon la revendication 1, caractérisé en ce que l'organe de retenue (2) est une pièce rigide mobile en translation qui comporte une pointe cônique (13a) en appui contre le balancier (1) dans la position d'enclenchement, une plaque (16) de support de contacts auxiliaires (41), une tige (13) coaxiale à la pointe cônique et une tête élargie (14) située à une extrémité de la tige, et en ce que ladite tige est guidée dans un passage fixe solidaire du bâti de l'appareil tandis que ladite tête constitue l'armature de l'électro-aimant (3) de réenclenchement.

3. Coupe-circuit selon la revendication 2, caractérisé en ce que le porte-contact (31) est situé dans un emplacement décalé latéralement par rapport au support (16) des contacts auxiliaires (41), s'étend parallèlement à un côté de ce support et est monté pivotant sur des éléments (33) dudit système articulé.

4. Coupe-circuit selon la revendication 3, caractérisé en ce que ledit système articulé est constitué par deux barres parallèles (33) articulées sur la plaque (16) de support des contacts auxiliaires (41) à une de leurs extrémités et sur un élément (9) de bâti de l'appareil à leur autre extrémité.

5. Coupe-circuit selon la revendication 4, caractérisé en ce que le porte-contact (31) est relié aux dites barres parallèles (33) par des articulations situées à ses deux extrémités et en ce que son orientation autour de son axe d'articulation est guidée par la plaque (16) de support des contacts auxiliaires (41).

6. Coupe-circuit selon la revendication 1, caractérisé en ce que le porte-contact (31) présente un logement, en ce que l'élément de contact mobile (32) est engagé dans ce logement et retenu en place par des éléments élastiques (36) de pression et en ce que ledit interrupteur comporte deux éléments de contact fixes (34a, 34b) disposés l'un à côte de l'autre et contre lesquels l'élément de contact mobile (32) vient s'appuyer lorsque le coupe-circuit est en position d'enclenchement.

7. Coupe-circuit selon la revendication 1, caractérisé en ce qu'il comporte en outre un électro-aimant de déclenchement [à distance (4)] formé d'une armature mobile (27) en translation et d'une bobine d'excitation (25) fixe et en ce que ladite armature porte un élément de déverrouillage (29) capable de venir en contact avec le balancier (1) pour l'écarter de sa position d'enclenchement lorsque la bobine de l'électro-aimant de dérclenchement est excitée.

8. Coupe-circuit selon la revendication 2, caractérisé en ce que la plaque (16) de support des contacts auxiliaires (41) porte une pluralité d'éléments de contact constituant, avec des éléments de contact homologues (42) montés élastiquement sur le bâti de l'appareil, des interrupteurs auxiliaires, ceux-ci étant fermés lorsque l'organe de retenue (2) se trouve dans la position de déclenchement.

**Patentansprüche**

1. Sicherheitsschalter für Fahrzeug, mit einem Pendel (1), das auf einem Pendellager (20) gelagert ist, einem Pendelrückhalteorgan (2), das zwischen einer Einschalt- und einer Ausschaltlage hin- und herbeweglich ist, einer Feder (17), die so auf das Pendelrückhalteorgan einwirkt, daß es dasselbe am Pendel in Anlage hält und dieses letztere verriegelt, wenn der Schalter sich in Einschaltlage befindet, und daß es dieses Rückhalteorgan zur Ausschaltlage hin bewegt, wenn das Pendel in Folge eines Stoßes aus seiner verriegelten Lage entfernt wird, und einem Unterbrecher, der mindestens ein feststehendes Kontaktelement (34) und ein bewegliches Kontaktelement 32 aufweist, wobei letzteres auf einem Kontaktträger (31) angebracht ist, der sich mit dem Rückhalteorgan (2) bewegt, dadurch gekennzeichnet, daß der Kontaktträger (31) mit dem Rückhalteorgan durch ein System von gelenkig verbundenen Elementen (33) wirkverbunden ist, welches ihm eine Bewegungsamplitude auferlegt, die kleiner ist als jene des Rückhalteorgans bei seiner Auslösung, und daß das Rückhalteorgan mit einem Ankerelement (14) verbunden ist, das befähigt ist, mit einer Elektromagnetspule (12) zusammenzuarbeiten, die in einem Wiedereinschaltstromkreis eingeschlossen ist.

2. Sicherheitsschalter nach Anspruch 1, dadurch gekennzeichnet, daß das Rückhalteorgan (2) aus einem starren längsbeweglichen Stück, das eine konische Spitze (13a) besitzt, welche am Pendel (1) anliegt, wenn dieses seine Einschaltlage einnimmt, einer Hilfskontakte (41) tragenden Platte (16), einem zur konischen Spitze koaxialen Schaft (13) und einem verdickten, an einem Ende des Schaftes gelegenen Kopf (14) besteht, und daß besagter Schaft in einer feststehenden Führung geführt ist, die in bezug auf das Apparategehäuse unbeweglich ist, wogegen der besagte Kopf den Anker des Widereinschaltelektromagnets (3) bildet.

3. Sicherheitsschalter nach Anspruch 2, dadurch gekennzeichnet, daß der Kontaktträger (31) in einem Sitz aufgenommen ist, der seitlich gegenüber der die Hilfskontakte (41) tragenden Platte (16) versetzt ist, sich parallel zu einer Seite dieses Supportes erstreckt und schwenkbar auf Elementen (33) des besagten Systems von gelenkig verbundenen Elementen gehaltert ist.

4. Sicherheitsschalter nach Anspruch 3, dadurch gekennzeichnet, daß das besagte System von gelenkig angeschlossenen Elementen aus zwei zueinander parallelen Lenkern (33) besteht, die an einem ihrer Enden auf der die Hilfskontakte tragenden Platte (16) angelenkt sind, und die an ihrem anderen Ende an einem Gehäuseelement des Sicherheitsschalters angelenkt sind.

5. Sicherheitsschalter nach Anspruch 4, dadurch gekennzeichnet, daß der Kontaktträger (31) mit den besagten zueinander parallelen Lenkern (33) durch Gelenke verbunden ist, die an seinen beiden Enden gelegen sind und daß seine Orientierung um seine Anlenkachse durch die, die Hilfskontakte (41) tragende Platte (16) geführt ist.

6. Sicherheitsschalter nach Anspruch 1, dadurch gekennzeichnet, daß der Kontaktträger (31) eine Sitzausnehmung hat, daß der bewegliche Kontaktelement (32) in dieser Sitzausnehmung eingesetzt und dort durch elastische Druckelemente (36) festgehalten ist und daß der besagte Unterbrecher zwei feststehende Kontaktelemente (34a, 34b) aufweist, die nebeneinander angeordnet sind und an denen das bewegliche Kontaktelement (32) anliegt, wenn der Unterbrecher seine Schließlage einnimmt.

7. Sicherheitsschalter nach Anspruch 1, dadurch gekennzeichnet, daß er außerdem einen Fernbedienungs-Ausschaltelektromagneten (4) aufweist, der aus einem längsbeweglichen Anker (26) und einer feststehenden Erregerspule (25) besteht und das der besagte Anker ein Entriegelungselement (29) trägt, das dazu befähigt ist, mit dem Pendel (1) in Berührung zu kommen, um ihn aus seiner Einschaltlage zu entfernen, wenn die Erregerspule vom Ausschaltelektromagneten erregt ist.

8. Sicherheitsschalter nach Anspruch 2, dadurch gekennzeichnet, daß die die Hilfskontakte (41) tragende Platte (16) eine Mehrzahl von Kontaktelementen trägt, welche zusammen mit homologen Kontaktelementen (42), die elastisch am Apparatengehäuse abgestützt sind, Hilfsunterbrecher bilden, die geschlossen sind, wenn das Rückhalteorgan (2) sich in der Ausschaltlage befindet.

**Claims**

1. Safety cut-out for a vehicle, comprising a rocker (1) mounted on a ball (20), a rocker-holding member (2) movable between a circuit-closing position and a circuit-opening position, a spring (17) acting upon the holding member so as to keep it pressed against the rocker and lock the latter when the cut-out is in circuit-closing position, and to shift it towards the circuit-opening position when the rocker is dislodged from its locked position as a result of a concussion, and a switch comprising at least one fixed contact element (34) and one movable contact element (32), the latter mounted on a contact-holder (31) which moves with the holding member (2), characterized in that the contact-holder (31) is connected to the holding member by a system of linked elements (9, 33) which causes it to effect a movement of lesser amplitude than that of the holding member at the time of the circuit-opening, and in that the holding member is connected to an armature element (14) capable of cooperating with an electromagnet coil (12) connected into a reclosing circuit.

2. Cut-out according to claim 1, characterized in that the holding member (2) is a rigid, translatable part which comprises a conical tip (13a) pressing against the rocker (1) in the circuit-closing position, a plate (16) for supporting auxiliary contacts (41), a rod (13) coaxial with the conical tip, and a widened head (14) situated at one end of the rod, and in that said rod is guided in a fixed passage integral with the frame of the apparatus, whereas said head constitutes the armature of the reclosing electromagnet (3).

3. Cut-out according to claim 2, characterized in that the contact-holder (31) is situated in a location offset laterally relative to the support (16) of the auxiliary contacts (41), extends parallel to one side of this support, and is pivotingly mounted on elements (33) of said linked system.

4. Cut-out according to claim 3, characterized in that said linked system is made up of two parallel bars (33) hinged at one of their ends to the support plate (16) of the auxiliary contacts (41) and at their other end to a frame element (9) of the apparatus.

5. Cut-out according to claim 4, characterized in that the contact-holder (31) is connected to the said parallel bars (33) by links situated at its two ends, and in that its orientation about its linking axis is guided by the support plate (16) of the auxiliary contacts (41).

6. Cut-out according to claim 1, characterized in that the contact-holder (31) exhibits a seating, in that the movable contact element (32) is engaged in this seating and held in place by resilient pressure elements (36), and in that said switch comprises two fixed contact elements (34a, 34b) disposed one beside the other and against which the movable contact element (32) presses when the cut-out is in circuit-closing position.

7. Cut-out according to claim 1, characterized in that it further comprises a remote circuit-opening electromagnet formed of a translatable armature (26) and of a fixed excitation coil (25), and in that said armature bears an unlocking element (29) capable of coming into contact with the rocker (1) in order to dislodge it from its circuit-closing position when the coil of the circuit-opening electromagnet is excited.

8. Cut-out according to claim 2, characterized in that the support plate (16) of the auxiliary contacts (41) bears a plurality of contact elements constituting, with homologous contact elements (42) mounted resiliently on the frame of the apparatus, auxiliary switches, the latter being closed when the holding member (2) is in the circuit-opening position.

0 013 779

FIG. 1

FIG. 2

FIG. 3

FIG. 4

FIG. 5